# FASCICULE DE BREVET EUROPEEN

(11) **EP 0 375 531 B1**
(45) Date de publication et mention de la délivrance du brevet: **09.03.1994**
(21) Numéro de dépôt: 89403526.0
(22) Date de dépôt: 18.12.1989
(51) Int. Cl.: G21F 7/04, B25J 21/02, F16L 31/00

(54) **Dispositif de raccordement étanche de l'extrémité d'une manchette souple sur une paroi tubulaire souple**
Abdichtende Verbindungsvorrichtung zwischen dem Ende einer biegsamen Manschette und der Wand eines Schlauches
Device for tightly fastening the end of a flexible sleeve to the wall of a flexible pipe

(30) Priorité: 19.12.1988 FR 8816735
(43) Date de publication de la demande: 27.06.1990
(73) Titulaire: S.N.E. LA CALHENE, F-78140 Velizy (FR)
(72) Inventeur: Lepissier, Jean-Jacques, F-41100 Vendome (FR)
(74) Mandataire: Mongrédien, André

(56) Documents cités:
- FR-A- 2 195 510
- FR-A- 2 598 768
- US-A- 4 141 609

## Description

L'invention concerne un dispositif permettant de raccorder de manière étanche l'extrémité d'une manchette souple sur une paroi tubulaire souple.

Un tel dispositif est principalement conçu pour raccorder une manchette de manipulation sur une paroi souple d'un isolateur destiné à assurer le confinement d'un certain volume d'air vis-à-vis de l'atmosphère extérieure. Il peut aussi être utilisé dans d'autres applications, et notamment pour assurer le raccordement étanche d'un gant de manipulation sur une manchette qui constitue alors la paroi tubulaire souple. Plus généralement le dispositif de raccordement étanche selon l'invention peut être utilisé notamment dans les domaines médical, biologique, pharmaceutique et électronique, à chaque fois qu'il est nécessaire de raccorder de façon étanche et démontable deux organes tubulaires souples réalisés par exemple en matière plastique ou en latex.

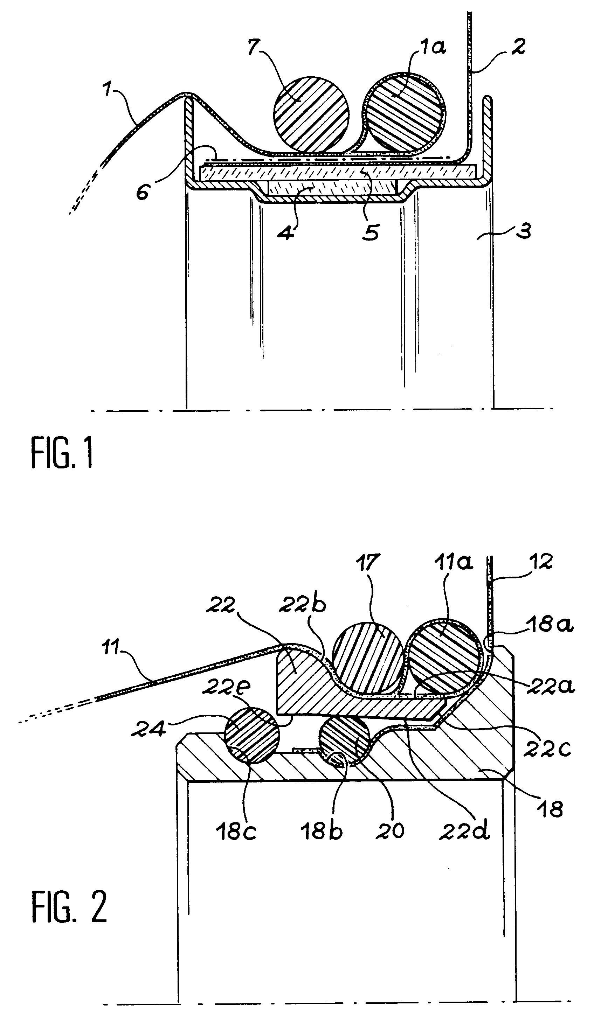

La figure 1 annexée illustre de façon schématique un dispositif de raccordement habituellement utilisé pour raccorder l'extrémité d'une manchette souple 1 sur une paroi souple 2 d'un isolateur de confinement.

Ce dispositif connu comprend une jante 3, réalisée en acier peint, dont la forme est approximativement la même qu'une jante de roue de bicyclette. Deux bandes élastiques en latex 4 et 5 sont placées sur la jante 3, afin de définir autour de celle-ci une surface cylindrique dont la génératrice soit approximativement rectiligne. La paroi souple 2 de l'isolateur, qui est percée à cet endroit d'un trou circulaire de diamètre approprié, est déformée pour prendre autour de ce trou une forme tubulaire afin d'être engagée à force sur la surface extérieure de la bande 5. Une bande adhésive armée 6 est ensuite placée sur cette partie tubulaire de la paroi 2, pour assurer son maintien mécanique.

Afin d'assurer le raccordement, un bourrelet torique 1a formé à l'extrémité de la manchette souple 1 est engagé sur la jante et placé autour de la partie tubulaire de la paroi 2 recouverte par la bande adhésive 6. Enfin, un joint d'immobilisation torique 7 est placé à force sur la partie de la manchette 1 adjacente au bourrelet 1a et monté sur la jante 3.

Ce dispositif de raccordement, d'utilisation courante, présente cependant de nombreux inconvénients. En premier lieu, la mise en place de la bande adhésive 6 présente des difficultés importantes et conduit le plus souvent à un système non étanche. Par ailleurs, le dispositif dans son ensemble présente une résistance mécanique faible. Enfin, la forme de la jante 3 conduit à une extension radiale d'une partie de la manchette 1, qui est en contact avec un flanc de la jante de faible épaisseur. Le risque de déchirement de la manchette dans cette zone est donc très important.

Un autre dispositif de raccordement étanche de l'extremité d'une manchette souple sur une paroi tubulaire souple est décrit dans US-A-4 141 609. Dans ce dispositif, une bague intérieure rigide comporte, sur sa surface extérieure, une gorge. La manchette est prévue pour être montée sur ladite gorge et un joint d'étancheité torique entourne l'extremité de la manchette dans cette gorge. Une bague extérieure rigide supporte de façon étanche l'extrémité de ladite paroi tubulaire et présente une surface intérieure touchant, en position raccordé, le joint autour de la bague intérieure.

Encore un autre dispositif de raccordement étanche avec une bague intérieure et une bague extérieure rigides est connu du FR-A-2 598 768. La bague intérieure de ce dispositif comporte, sur sa surface extérieure, deux gorges adjacentes pour un joint d'étancheité torique. La bague extérieure présente une surface intérieure de diamètre variable assurant, lors de l'emboîtement de la bague extérieure sur la bague intérieure, un roulement du joint de l'une à l'autre des gorges.

L'invention a précisément pour objet un dispositif de raccordement qui, tout en étant interchangeable avec le dispositif habituel qui vient d'être décrit, procure une étanchéité parfaite et un maintien mécanique important, pour une sollicitation mécanique moindre de la manchette.

Selon l'invention, ce résultat est obtenu au moyen d'un dispositif de raccordement étanche de l'extrémité d'une manchette souple sur une paroi tubulaire souple comprenant:
- une bague intérieure rigide comportant, sur sa surface extérieure, deux gorges adjacentes et un épaulement voisin d'une première desdites gorges, la paroi tubulaire souple étant prévue pour être montée sur ladite première gorge et contre ledit épaulement ;
- un joint d'étanchéité torique apte à rouler entre lesdites gorges, pour bloquer la paroi tubulaire souple dans ladite première gorge ; et
- une bague extérieure rigide supportant de façon étanche l'extrémité de ladite manchette et présentant une surface intérieure de diamètre variable assurant, lors de l'emboîtement de cette bague extérieure sur la bague intérieure, un roulement du joint entre la deuxième et la première gorge et une immobilisation de la bague extérieure contre ledit épaulement.

Avantageusement, un joint d'immobilisation torique est prévu pour être monté dans la deuxième gorge, après emboîtement de la bague extérieure, afin d'éviter tout échappement accidentel de cette dernière.

Comme dans le dispositif existant, l'extrémité de la manchette comporte un bourrelet monté sur une surface extérieure de la bague extérieure, et un deuxième joint d'immobilisation est placé sur la manchette entre ce bourrelet et une partie en surplomb de la surface extérieure de la bague extérieure.

Dans un mode de réalisation préféré de l'invention, la surface intérieure de la bague extérieure rigide comprend successivement, en partant de l'extrémité tournée vers la partie en saillie de la bague intérieure rigide, une partie biseautée, une partie tronconique dont le diamètre augmente à partir de la partie biseautée, et une partie cylindrique.

Un mode de réalisation préféré de l'invention va à présent être décrit, à titre d'exemple non limitatif, en se référant aux dessins annexés, dans lesquels :
- la figure 1, déjà décrite, est une vue en coupe illustrant de façon schématique un dispositif de raccordement conforme à l'état actuel de la technique ; et
- la figure 2 est une vue comparable à la figure 1 illustrant un dispositif de raccordement étanche conforme à l'invention.

Sur la figure 2, les références 11 et 12 désignent respectivement l'extrémité d'une manchette de manipulation souple et la partie de la paroi souple d'un isolateur de confinement entourant une ouverture circulaire conçue pour assurer le raccordement de la manchette 11.

Le dispositif de raccordement étanche et démontable conforme à l'invention comprend une bague intérieure rigide 18 dont la surface extérieure présente, en allant de la droite vers la gauche sur la figure 2, une partie d'extrémité en saillie formant un épaulement 18a, une première gorge à section en arc de cercle 18b et une deuxième gorge à section en arc de cercle 18c.

L'épaulement 18a présente successivement, en allant vers la gorge 18b, une partie approximativement radiale et une partie tronconique. Cette dernière est reliée à la gorge 18b par une partie cylindrique. Les gorges 18b et 18c sont séparées par une partie cylindrique dont le diamètre n'est que légèrement supérieur au diamètre de la bague 18 au fond des gorges 18b et 18c, ce dernier diamètre étant le même pour les deux gorges. Enfin, la partie de la bague 18 située entre la gorge 18c et l'extrémité gauche de celle-ci en considérant la figure 2 présente une configuration cylindrique dont le diamètre, approximativement égal à celui de la partie cylindrique située à droite de la gorge 18b en considérant la figure 2, est supérieur à celui de la partie cylindrique comprise entre les deux gorges.

Le dimensionnement de la bague 18 est déterminé en fonction du diamètre de l'ouverture circulaire formée dans la paroi 12, de telle sorte que la partie de cette dernière entourant l'ouverture est engagée à force sur une partie de la surface extérieure de la bague 18 recouvrant, en partant de l'ouverture formée dans la paroi 12, la gorge 18b, l'épaulement 18a et la partie cylindrique, séparant ces derniers.

Le dispositif de raccordement étanche selon l'invention comprend de plus un joint d'étanchéité torique 20 qui est placé initialement dans la gorge 18c, tout en étant apte à rouler jusqu'à la gorge 18b lorsqu'un effort est appliqué parallèlement à l'axe de la bague 18 sur ce joint.

Le dispositif de raccordement étanche illustré sur la figure 2 comprend de plus une bague extérieure rigide 22 supportant l'extrémité de la manchette 11.

De façon plus précise, la surface extérieure de la bague 22 présente, en allant de la droite vers la gauche en considérant la figure 2, une partie cylindrique 22a de relativement petit diamètre, suivie par une partie en surplomb 22b, de section curviligne, dont le diamètre croît progressivement de façon à ne former aucune discontinuité depuis la partie cylindrique jusqu'à l'extrémité gauche de la bague 22 en considérant la figure 2. L'extrémité de la manchette 11, terminée de façon habituelle par un bourrelet 11a, est engagée à force sur la surface extérieure de la bague 22 et un joint d'immobilisation élastique 17, de forme torique est placé autour de la partie de la manchette 11 montée sur la bague 22, entre le bourrelet d'extrémité 11a et la partie en surplomb 22b de la surface extérieure de cette bague.

Compte tenu de la forme de la surface extérieure de la bague 22, il est à noter que le joint d'immobilisation force le bourrelet 11a à faire pression sur la paroi souple 12, pour plaquer cette dernière contre l'épaulement 18a de la bague intérieure 18. La propagation de la contamination est ainsi empêchée.

De plus, la surface intérieure de la bague 22 présente une forme particulière conçue pour faire rouler le joint 20 entre les gorges 18b et 18c de la bague 18 lorsque la bague 22 est déplacée axialement sur cette dernière, et pour immobiliser la bague 22 lorsqu'elle occupe sa position de raccordement sur la bague 18 illustrée sur la figure 2.

De façon plus précise, la surface intérieure de la bague 22 présente, en partant de la droite en considérant la figure 2, une partie biseautée 22c, une partie tronconique 22d dont le diamètre augmente lentement à partir de la partie biseautée 22c et une partie cylindrique 22e.

Le diamètre des parties 22d et 22e de la surface intérieure de la bague 22 étant inférieur au diamètre extérieur du joint 20, lorsque la bague 22 portant l'extrémité de la manchette 11 est engagée sur la bague 18, le joint 20 roule automatiquement de la gorge 18c dans la gorge 18b. Quand le joint 20 se trouve dans la gorge 18b, le bourrelet 11a placé à l'extrémité de la manchette 11 est en appui contre la partie droite de plus grand diamètre formée sur la bague 18, comme l'illustre la figure 2. Le raccordement étanche de la manchette 11 sur la paroi 12 est alors réalisé.

De préférence, afin d'éviter tout démontage accidentel de la bague 22, un joint d'immobilisation élastique 24, de forme torique, et de diamètre légérement supérieur à celui du joint 20 est placé dans la gorge 18c.

Comme l'illustre la description qui précède, l'utilisation du dispositif de raccordement étanche selon l'invention ne nécessite aucune modification des installations existantes. De plus, il permet d'assurer une étanchéité parfaite du raccordement et un bon maintien mécanique. La forme arrondie de la surface extérieure de la bague 22 sur laquelle est montée l'extrémité de la manchette 11 est en outre adaptée afin d'éviter tout risque de déchirure de cette dernière.

## Revendications

1. Dispositif de raccordement étanche de l'extrémité d'une manchette souple (11) sur une paroi tubulaire souple (12) comprenant:
- une bague intérieure rigide (18) comportant, sur sa surface extérieure, deux gorges adjacentes (18b, 18c) et un épaulement (18a) voisin d'une première (18b) desdites gorges, la paroi tubulaire souple (12) étant prévue pour être montée sur ladite première gorge et contre ledit épaulement ;
- un joint d' étanchéité torique (20) apte à rouler entre lesdites gorges (18b, 18c) pour bloquer la paroi tubulaire souple dans ladite première gorge (18b) et
- une bague extérieure rigide (22) supportant de façon étanche l'extrémité de ladite manchette (11) et présentant une surface intérieure de diamètre variable assurant, lors de l'emboîtement de cette bague extérieure sur la bague intérieure, un roulement du joint (20) entre la deuxième et la première gorges et une immobilisation de la bague extérieure contre ledit épaulement.

2. Dispositif selon la revendication 1, caractérisé par le fait qu'il comprend de plus un joint d'immobilisation (24) apte à être monté dans la deuxième gorge (18c) après emboîtement de la bague extérieure (22).

3. Dispositif selon l'une quelconque des revendications 1 et 2, caractérisé par le fait que l'extrémité de la manchette (11) comporte un bourrelet (11a) monté sur une surface extérieure de la bague extérieure (22), un deuxième joint d'immobilisation (17) étant placé sur la manchette entre ce bourrelet et une partie en surplomb (22b) de ladite surface extérieure de la bague extérieure.

4. Dispositif selon la revendication 3, caractérisé par le fait que la partie en surplomb (22b) de la surface axtérieure de la bague extérieure présente une forme arrondie.

5. Dispositif selon l'une quelconque des revendications précédentes, caractérisé par le fait que la surface intérieure de la bague extérieure rigide (22) comprend successivement, en partant de l'extrémité tournée vers l'épaulement (18a) de la bague intérieure rigide, une partie biseautée (22c), une partie tronconique (22d) dont le diamètre augmente à partir de ladite partie biseautée, et une partie cylindrique (22c).

## Claims

1. Device for the tight fastening of the end of a flexible collar (11) on a flexible tubular wall (11) comprising:
a rigid inner ring (18) having on its outer surface tow adjacent grooves (18b, 18c) and a shoulder (18a) adjacent to a first (18b) of said grooves, the flexible tubular wall to be mounted on said first groove and against said shoulder;
a toric seal (20) that can roll between said grooves (18b, 18c) to lock the flexible tubular wall in said first groove (18b); and
a rigid outer ring (22) tightly supporting the end of said collar (11) with an inner surface varying in diameter which ensures that during the engagement of the outer ring onto the inner ring the joint (20) between the second and first grooves can roll and the outer ring is immobilized against said shoulder.

2. Device according to claim 1, characterized in that it also comprises an immobilization joint (24) that can be mounted in a second groove (18c) after engaging the outer ring.

3. Device according to either of the claims 1 and 2, characterized in that the end of the collar (11) includes a flange (11a) mounted on an outer surface of the outer ring (22), a second immobilization joint (17) being placed on the collar between this flange and a part (22b) projecting from said outer surface of the outer ring.

4. Device according to claim 3, characterized in that the part (22b) protruding from the outer surface of the outer ring is round in shape.

5. Device according to any one of the preceding claims, characterized in that the inner surface of the rigid outer ring (22) successively comprises, starting at the end turned toward the shoulder (18a) of the rigid inner ring, a bevelled part (22c), a truncated part (22d), whose diameter increases starting from said bevelled part, and a cylindrical part (22c).

## Patentansprüche

1. Abdichtende Verbindungsvorrichtung zwischem dem Ende einer biegsamen Manschette (11) und einer biegsamen, röhrenförmigen Wandung (12), umfassend:
- einen steifen Innenring (18), umfassend, auf seiner Außenfläche, zwei benachbarte Hohlkehlen (18b, 18c) und eine Schulter (18a), nahe einer ersten (18b) der genannten Hohlkehlen, wobei die röhrenförmige, biegsame Wandung (12) dazu vorgesehen ist, in der genannten ersten Hohlkehle und an der genannten Schulter angebracht zu werden;
- einen Dichtring (20), geeignet sich rundzubiegen zwischen den genannten Hohlkehlen (18b, 18c), um die biegsame röhrenförmige Wandung in der ersten Hohlkehle (18b) festzuklemmen; und
- einen steifen Außenring (22), der auf abdichtende Weise das Ende der genannten Manschette (11) trägt und eine Innenfläche mit veränderlichem Durchmesser aufweist, die beim Aufstecken dieses Außenrings auf den Innenring eine Rundbiegung der Dichtung (20) zwischen der zweiten und der ersten Hohlkehle und eine Festsetzung des Außenrings an der genannte Schulter gewährleistet

2. Vorrichtung nach Anspruch 1, dadurch gekennzeichnet, daß sie außerdem eine Festsetzungsdichtung (24) enthält, passend, um in der zweite Hohlkehle (18c) angebracht zu werden, nach dem Aufstecken des Außenrings (22).

3. Vorrichtung nach einem der Ansprüche 1 und 2, dadurch gekennzeichnet, daß das Ende der Manschette (11) einen Wulst (11a) aufweist, angebracht auf einer Außenseite des Außenrings (22), wobei eine zweite Festsetzungsdichtung (17) angebracht wird auf der Manschette zwischen diesem Wulst und einem überstehenden Teil (22b) der Außenseite des Außenrings.

4. Vorrichtung nach Anspruch 3, dadurch gekennzeichnet, das der überstehende Teil (22b) der Außenseite des Außenrings eine abgerundete Form aufweist.

5. Vorrichtung nach einem beliebigen der vorhergehenden Ansprüche, dadurch gekennzeichnet, daß die Innenfläche des steifen Außenrings (22), ausgehend von dem gegen die Schulter (18a) gerichteten Ende, nacheinander einen angeschrägten Teil (22c), einen kegelstumpfartigen Teil (22d), dessen Durchmesser ab dem angeschrägten Teil zunimmt, und einen zylindrischen Teil (22c) aufweist.
